# DEMANDE DE BREVET EUROPEEN

(11) **EP 4 071 977 A1**
(43) Date de publication de la demande: **12.10.2022**
(21) Numéro de dépôt: 22166825.4
(22) Date de dépôt: 05.04.2022
(51) Int. Cl.: H02K 3/28, H02K 11/00, B60L 1/00, H02M 7/48, B64D 27/24, B64D 41/00, H02K 21/48

(54) **ENSEMBLE MOTEUR ELECTRIQUE DE PROPULSION AVEC GENERATEUR ELECTRIQUE**

(30) Priorité: 07.04.2021 FR 2103537
(71) Demandeur: Airbus Operations SAS, 31060 Toulouse (FR)
(72) Inventeur: ALLIAS, Jean-François, 31060 TOULOUSE (FR); RASPATI, Olivier, 31060 TOULOUSE (FR)
(74) Mandataire: Cabinet Le Guen Maillet

(57) **Abrégé**

Un ensemble moteur électrique de propulsion pour aéronef comporte une source d'énergie électrique et un moteur électrique muni d'un arbre d'entraînement sur lequel est montée une hélice de propulsion. Le moteur électrique comporte un premier ensemble de bobinages (203a, 203b, 203c) relié à la source d'énergie électrique pour réaliser une fonction d'entraînement en rotation de l'arbre d'entraînement. Le moteur électrique comporte en outre un deuxième ensemble de bobinages (204a, 204b, 204c) qui, lorsque l'arbre d'entraînement est entraîné en rotation par une alimentation électrique du premier ensemble de bobinages, réalise une fonction de génération électrique destinée à alimenter des charges non propulsives de l'aéronef. Ainsi, les charges non propulsives de l'aéronef peuvent être alimentées électriquement sans surcharge nuisant à l'aérodynamisme de l'aéronef.

## Description

### DOMAINE TECHNIQUE

L'invention concerne un ensemble moteur électrique de propulsion pour aéronef qui, outre une fonction d'entraînement (« drive » en anglais) d'hélice de propulsion, réalise une fonction de génération électrique pour alimenter électriquement des charges non-propulsives de l'aéronef. L'invention concerne aussi un aéronef équipé d'au moins un tel ensemble moteur électrique de propulsion.

### ETAT DE LA TECHNIQUE ANTERIEURE

Les aéronefs sont souvent propulsés grâce à des moteurs à turbine. Alors, pour alimenter électriquement des équipements à bord de ces aéronefs (charges non propulsives), une génératrice électrique auxiliaire alimentée en kérosène est utilisée. On parle de groupe ou d'unité auxiliaire de puissance APU (« Auxiliary Power Unit » en anglais). En variante, des prélèvements mécaniques sont réalisés sur des arbres de rotation des moteurs à turbine, par exemple sur des arbres haute pression (HP) de moteurs à fort taux de dilution. La rotation de l'arbre moteur est alors convertie en énergie électrique par une génératrice électrique, telle qu'une génératrice à fréquence variable VFG (« Variable Frequency Generator » en anglais), pour alimenter électriquement des équipements à bord.

Les aéronefs peuvent en variante être propulsés grâce à des moteurs électriques. Cependant, réaliser un prélèvement mécanique sur un arbre de rotation d'un tel moteur pour alimenter électriquement des équipements à bord de ces aéronefs (charges non propulsives) requiert d'ajouter une boîte à engrenages (« gear box » en anglais) sur l'arbre de sortie (« output shaft » en anglais) du moteur électrique. L'ajout de cette boîte à engrenages entraînerait un accroissement de poids non négligeable. Surtout, l'ajout de cette boîte à engrenage augmenterait significativement l'encombrement, ce qui induirait un important volume supplémentaire à intégrer au niveau des ensembles moteur (unités de propulsion) et nuirait à l'aérodynamique de l'aéronef (pénalité de traînée, ou « drag penalty » en anglais).

Etant donné que les moteurs électriques servant à la propulsion des aéronefs sont typiquement alimentés par des piles à combustible (« fuel cells » en anglais), des convertisseurs continu-continu (« DC/DC converters » en anglais) pourraient être parallélisés pour alimenter électriquement des équipements à bord des aéronefs (charges non propulsives) à partir de ces piles à combustible. Cependant, cette approche nécessiterait une quantité importante de convertisseurs DC/DC, ce qui augmenterait le poids et l'encombrement, et augmenterait d'autant le risque qu'un tel convertisseur DC/DC tombe en panne.

Il est donc souhaitable de fournir une solution qui pallie ces différents inconvénients de l'état de la technique. Plus particulièrement, il est souhaitable de fournir une solution d'alimentation électrique de charges non-propulsives à bord d'un aéronef, qui soit de faible encombrement et qui ne nuise pas à l'aérodynamisme de l'aéronef.

### EXPOSE DE L'INVENTION

A cet effet, il est proposé un ensemble moteur électrique de propulsion pour aéronef, comportant une source d'énergie électrique et un moteur électrique muni d'un arbre d'entraînement sur lequel est montée une hélice de propulsion, le moteur électrique comportant un premier ensemble de bobinages relié à ladite source d'énergie électrique et agencé pour réaliser une fonction d'entraînement en rotation de l'arbre d'entraînement. Le moteur électrique comporte en outre un deuxième ensemble de bobinages qui, lorsque l'arbre d'entraînement est entraîné en rotation par une alimentation électrique du premier ensemble de bobinages, est agencé pour réaliser une fonction de génération électrique destinée à alimenter des charges non propulsives de l'aéronef. Ainsi, les charges non propulsives de l'aéronef peuvent être alimentées électriquement sans surcharge nuisant à l'aérodynamisme de l'aéronef.

Selon un mode de réalisation particulier, le premier ensemble de bobinages est inclus dans un premier stator installé de manière solidaire d'un carter du moteur électrique, le deuxième ensemble de bobinages est inclus dans un deuxième stator installé aussi de manière solidaire du carter, et les premier et deuxième stators sont couplés à un même rotor installé de manière solidaire de l'arbre d'entraînement.

Selon un mode de réalisation particulier, le deuxième stator est installé dans le carter entre le premier stator et un fond dudit carter côté non-entraîné.

Selon un mode de réalisation particulier, la source d'énergie électrique est un ensemble de piles à combustible.

Selon un mode de réalisation particulier, l'hélice est montée en roue libre sur l'arbre d'entraînement de sorte que, lorsque l'arbre d'entraînement tourne dans un sens, l'arbre d'entraînement est en prise avec l'hélice et entraîne l'hélice en rotation, et lorsque l'arbre d'entraînement tourne dans l'autre sens par déphasage de π de l'alimentation électrique du premier ensemble de bobinages, l'arbre d'entraînement tourne librement sans entraîner l'hélice.

Selon un mode de réalisation particulier, l'ensemble moteur électrique de propulsion comporte un convertisseur continu-alternatif qui est agencé pour convertir un courant continu généré par la source d'énergie électrique en courant alternatif alimentant le premier ensemble de bobinages et qui est contrôlé pour appliquer un déphasage de π de l'alimentation électrique du premier ensemble de bobinages pour changer le sens de rotation de l'arbre d'entraînement.

Selon un mode de réalisation particulier, l'ensemble moteur électrique de propulsion comporte : un convertisseur continu-alternatif agencé pour convertir un courant continu généré par la source d'énergie électrique en courant alternatif alimentant le premier ensemble de bobinages ; une autre source d'énergie électrique ; et un autre convertisseur continu-alternatif agencé pour convertir un courant continu généré par l'autre source d'énergie électrique en courant alternatif alimentant le premier ensemble de bobinages et qui est agencé pour générer une alimentation électrique déphasée de π. Les convertisseurs continu-alternatif sont contrôlés pour être activés de manière exclusive l'un par rapport à l'autre.

Il est aussi proposé un aéronef comportant au moins un ensemble moteur électrique de propulsion, tel qu'évoqué ci-dessus dans l'un quelconque de ses modes de réalisation, alimentant des charges non propulsives de l'aéronef.

Selon un mode de réalisation particulier, l'aéronef comporte au moins une source d'alimentation électrique supplémentaire agencée pour prendre momentanément le relais du deuxième ensemble de bobinages et alimenter électriquement les charges non-propulsives de l'aéronef lorsque le moteur électrique doit être arrêté.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un aéronef équipé d'au moins un ensemble moteur électrique de propulsion agencé pour fournir une alimentation électrique à des charges non propulsives de l'aéronef ;
[Fig. 2] illustre schématiquement des premier et deuxième ensembles de bobinages de l'ensemble moteur électrique de propulsion ;
[Fig. 3] illustre schématiquement un premier mode de réalisation de l'ensemble moteur électrique de propulsion ; et
[Fig. 4] illustre schématiquement un deuxième mode de réalisation de l'ensemble moteur électrique de propulsion.

### EXPOSE DETAILLE DE MODES DE REALISATION

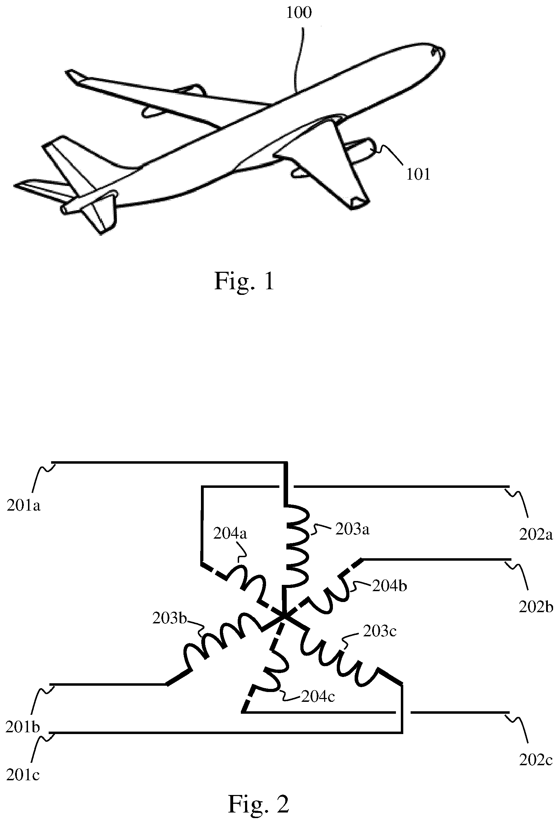

La **Fig. 1** illustre schématiquement un aéronef 100. L'aéronef 100 est équipé d'au moins un ensemble moteur électrique de propulsion 101 (« propulsive electrical motor set » en anglais). On parle aussi d'« unité de propulsion ».

Chaque ensemble moteur électrique de propulsion 101 est agencé et installé sur l'aéronef pour fournir une puissance de propulsion à l'aéronef 100. Au moins un tel ensemble moteur électrique de propulsion 101 est agencé pour fournir en outre une alimentation électrique à des charges non propulsives de l'aéronef 100, telles que l'avionique, la climatisation, le contrôle cabine..., c'est-à-dire des équipements électriques non liés à la propulsion de l'aéronef 100. Pour ce faire, un agencement particulier des premier et deuxième ensembles de bobinages est réalisé, tel que schématiquement illustré sur la **Fig. 2****.** Le premier ensemble de bobinages réalise une fonction d'entraînement moteur, et le deuxième ensemble de bobinages réalise une fonction de génération électrique.

L'ensemble moteur électrique de propulsion 101 comporte un moteur électrique alimenté électriquement (« electrically powered » en anglais) par une source d'énergie électrique, préférentiellement un ensemble de piles à combustible. Le moteur électrique comporte un rotor et au moins un stator.

Dans un mode de réalisation particulier, le premier ensemble de bobinages (fonction d'entraînement moteur) est inclus dans un premier stator installé de manière solidaire d'un carter du moteur électrique. Le deuxième ensemble de bobinages (fonction de génération électrique) est inclus dans un deuxième stator installé aussi de manière solidaire du carter du moteur électrique. Les premier et deuxième stators sont couplés au même rotor installé de manière solidaire de l'arbre d'entraînement (ou arbre de sortie) du moteur électrique. Préférentiellement, le deuxième stator est installé dans le carter entre le premier stator et le fond dudit carter côté non-entraîné (« non-drive end » en anglais). Un avantage de cet agencement est d'accroître la facilité de lubrification, celle-ci étant partagée entre les fonctions d'entraînement moteur et de génération électrique. En variante, un unique stator comporte le premier ensemble de bobinages ainsi que le deuxième ensemble de bobinages.

Le moteur électrique reçoit l'alimentation électrique, fournie par la source d'énergie électrique, par des liens électriques 201a, 201b, 201c connectés à des bobinages 203a, 203b, 203c respectifs formant le premier ensemble de bobinages. L'énergie électrique fournie par la source d'énergie électrique est ainsi convertie en mouvement de rotation grâce au premier ensemble de bobinages.

Le moteur électrique comporte aussi le second ensemble de bobinages, qui assure la fonction de génération électrique. Le moteur électrique est donc aussi source d'alimentation électrique par des liens électriques 202a, 202b, 202c connectés à des bobinages 204a, 204b, 204c respectifs formant le second ensemble de bobinages.

Les bobinages du second ensemble de bobinages sont de moindres dimensions que les bobinages du premier ensemble de bobinages. La différence de dimensionnement des bobinages entre les deux ensembles permet au moteur électrique de fournir la poussée spécifiée pour les besoins de l'aéronef.

Ainsi, lorsque le moteur électrique est alimenté au moyen du premier ensemble de bobinages, sa rotation produit un courant dans le deuxième ensemble de bobinages, ce qui fournit une puissance électrique auxiliaire permettant d'alimenter les charges non propulsives de l'aéronef 100. Cet agencement offre une solution facile d'intégration et de faible encombrement, qui ne nuit donc pas à l'aérodynamisme de l'aéronef 100.

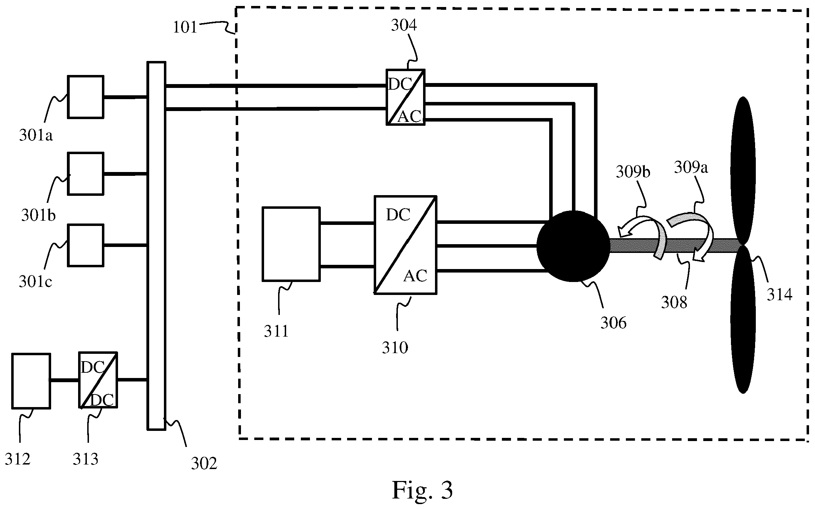

La **Fig. 3** illustre schématiquement un premier mode de réalisation de l'ensemble moteur électrique de propulsion 101.

L'ensemble moteur électrique de propulsion 101 comporte un moteur électrique 306 agencé comme précédemment décrit en relation avec la Fig. 2. Le moteur électrique comporte un arbre d'entraînement 308, ou arbre de sortie, sur lequel est montée une hélice 314 destinée à la propulsion de l'aéronef 100.

L'ensemble moteur électrique de propulsion 101 comporte alors la source d'énergie électrique susmentionnée 311. L'ensemble moteur électrique de propulsion 101 est ainsi un bloc monolithique qui inclut son propre système d'alimentation électrique, ce qui facilite son montage lors de la fabrication de l'aéronef 100. La source d'énergie électrique 311 peut toutefois, en variante, être externe à l'ensemble moteur électrique de propulsion 101.

Dans un mode de réalisation particulier, la source d'énergie électrique 311 est une pile à combustible ou préférentiellement un ensemble de piles à combustible, telles que des piles à hydrogène.

L'ensemble moteur électrique de propulsion 101 comporte en outre un convertisseur continu-alternatif (« DC/AC converter » en anglais) 310. Le convertisseur DC/AC 310 convertit le courant continu généré par la source d'énergie électrique 311 en courant alternatif alimentant le premier ensemble de bobinages (fonction d'entraînement moteur), par exemple en triphasé. Le convertisseur DC/AC 310 peut, en variante, être externe à l'ensemble moteur électrique de propulsion 101, typiquement groupé avec la source d'énergie électrique 311.

L'ensemble moteur électrique de propulsion 101 comporte en outre un convertisseur alternatif-continu (« AC/DC converter » en anglais) 304. Le convertisseur AC/DC 304 convertit le courant alternatif, par exemple triphasé, généré par le deuxième ensemble de bobinages (fonction de génération électrique), en courant continu destiné à alimenter des charges non-propulsives 301a, 301b, 301c de l'aéronef 100.

L'ensemble moteur électrique de propulsion 101 peut par exemple alimenter électriquement les charges non-propulsives 301a, 301b, 301c par l'intermédiaire d'une barre omnibus (ou jeu de barres, « busbar » en anglais) 302. La barre omnibus 302 peut être interne ou externe à l'ensemble moteur électrique de propulsion 101. La barre omnibus 302 peut être reliée à une alimentation électrique supplémentaire 312, localisée à l'extérieur de l'ensemble moteur électrique de propulsion 101, par l'intermédiaire typiquement d'un convertisseur DC/DC 313. Cette alimentation électrique supplémentaire 312, telle qu'une batterie, est utilisée pour prendre momentanément le relais du deuxième ensemble de bobinages (fonction de génération électrique) et alimenter électriquement des charges non-propulsives lorsque le moteur électrique 306 doit être arrêté.

Ainsi, l'ensemble moteur électrique de propulsion 101 alimente électriquement les charges non-propulsives 301a, 301b, 301c avec un faible coût d'encombrement qui ne nuit pas à l'aérodynamisme de l'aéronef 100.

La réglementation peut interdire, dans certaines circonstances lorsque l'aéronef 100 est au sol, que l'hélice 314 soit actionnée en rotation, pour des raisons de sécurité. Dans de telles circonstances, le moteur électrique 306 doit être arrêté, ce qui désactive la fonction de génération électrique réalisée par le deuxième ensemble de bobinages. Toutefois, un mode de réalisation particulier détaillé ci-après permet de limiter le recours à l'alimentation électrique supplémentaire 312 et d'en réduire le dimensionnement.

Dans ce mode de réalisation particulier, l'hélice 314 est montée en roue libre sur l'arbre d'entraînement 308. En d'autres termes, lorsque l'arbre d'entraînement 308 tourne dans un sens 309a, l'arbre d'entraînement 308 est en prise avec l'hélice 314 et entraîne l'hélice 314 en rotation ; et lorsque l'arbre d'entraînement 308 tourne dans l'autre sens 309b, l'arbre d'entraînement 308 tourne librement sans entraîner l'hélice 314.

Ainsi, lorsque l'hélice 314 est autorisée à tourner, le convertisseur DC/AC 310 est configuré pour alimenter le moteur électrique 306 de sorte à faire tourner l'arbre d'entraînement 308 dans le sens 309a et donc à entraîner l'hélice 314 en rotation. Et lorsque l'hélice 314 n'est pas autorisée à tourner, le convertisseur DC/AC 310 est configuré pour alimenter le moteur électrique 306 de sorte à faire tourner l'arbre d'entraînement 308 dans l'autre sens 309b, grâce à un déphasage de π du courant d'alimentation. Dans ce cas, l'arbre d'entraînement 308 tourne librement sans entraîner l'hélice 314. Ainsi, le deuxième ensemble de bobinages produit du courant électrique permettant d'alimenter électriquement les charges non-propulsives 301a, 301b, 301c même lorsque l'hélice 314 n'est pas autorisée à tourner. Préférentiellement, l'alimentation électrique supplémentaire 312 est utilisée comme relais d'alimentation électrique des charges non-propulsives 301a, 301b, 301c pendant une phase de changement de sens de rotation du moteur électrique 306.

Le convertisseur AC/DC 304 est configuré pour prendre en compte le déphasage de π du courant d'alimentation du premier ensemble de bobinages et donc du courant généré par le deuxième ensemble de bobinages. Le convertisseur AC/DC 304 est configuré pour basculer de mode de fonctionnement de manière synchronisée avec le convertisseur DC/AC 310.

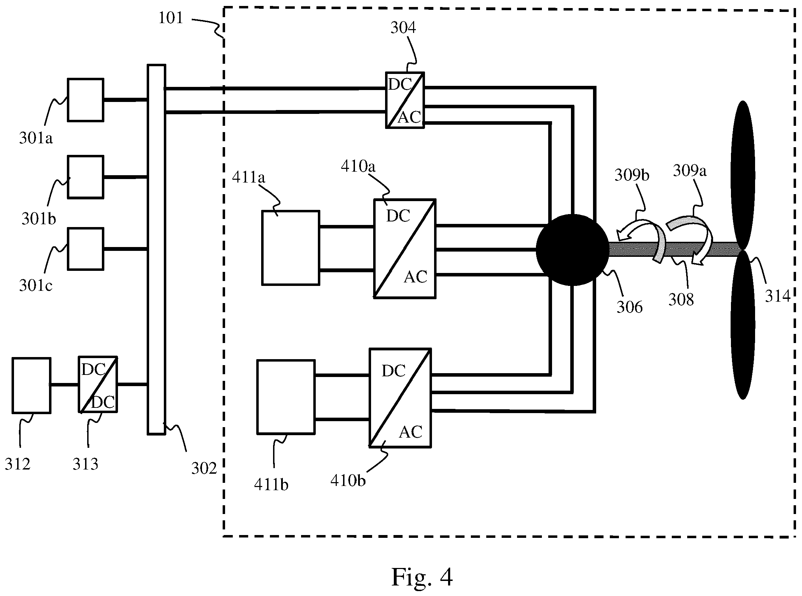

Un autre mode de réalisation particulier où l'hélice 314 est montée en roue libre sur l'arbre d'entraînement 308 est schématiquement illustré sur la **Fig. 4****.** Deux sources d'énergie électrique 411a, 411b sont utilisées en remplacement de la source d'énergie électrique 311. Les sources d'énergie électrique 411a, 411b sont des piles à combustible ou préférentiellement des ensembles de piles à combustible, telles que des piles à hydrogène. Deux convertisseurs DC/AC 410a, 410b sont alors utilisés en remplacement du convertisseur DC/AC 310 (un convertisseur pour chaque source d'énergie électrique 411a, 411b). Chacun des deux convertisseurs DC/AC 410a, 410b est relié au premier ensemble de bobinages.

Le convertisseur DC/AC 410a est configuré pour alimenter le moteur électrique 306 de sorte à faire tourner l'arbre d'entraînement 308 dans le sens 309a et donc à entraîner l'hélice 314 en rotation. Le convertisseur DC/AC 410b est configuré pour alimenter le moteur électrique 306 de sorte à faire tourner l'arbre d'entraînement 308 dans l'autre sens 309b, sans entraîner l'hélice 314 en rotation, avec donc un déphasage de π par rapport à l'alimentation électrique fournie par le convertisseur DC/AC 410a.

L'alimentation par le convertisseur DC/AC 410a est donc activée lorsque l'hélice 314 est autorisée à tourner et est désactivée lorsque l'hélice 314 n'est pas autorisée à tourner. A l'inverse, l'alimentation par le convertisseur DC/AC 410b est donc activée lorsque l'hélice 314 n'est pas autorisée à tourner et est désactivée lorsque l'hélice 314 est autorisée à tourner. Les convertisseurs DC/AC 410a, 410b sont donc activés de manière exclusive l'un par rapport à l'autre.

Le convertisseur AC/DC 304 est configuré pour prendre en compte le déphasage de π du courant d'alimentation du premier ensemble de bobinages et donc du courant généré par le deuxième ensemble de bobinages. Le convertisseur AC/DC 304 est configuré pour basculer de mode de fonctionnement de manière synchronisée avec les convertisseurs DC/AC 410a, 410b.

La configuration des convertisseurs DC/AC 304, 310, 410a, 410b pour contrôler la rotation de l'arbre d'entraînement dans un sens ou dans l'autre est réalisée par un ou plusieurs contrôleurs. Ces contrôleurs peuvent être internes ou externes à l'ensemble moteur électrique de propulsion 101. Ces contrôleurs peuvent être des microcontrôleurs, ou des processors ou des composants DSP « Digital Signal Processor chip » en anglais), exécutant des instructions de programme d'ordinateur stockées en mémoire et organisant le contrôle des convertisseurs DC/AC 310, 410a, 410b. Ces contrôleurs peuvent être des composants ou ensembles de composants (« chipset » en anglais) dédiés, tels que des composants FPGA (« Field-Programmable Gate Array » en anglais) ou ASIC (« Application-Specific Integrated Circuit » en anglais). Ces contrôleurs comportent ainsi de la circuiterie électronique configurée pour effectuer le contrôle souhaité des convertisseurs DC/AC 304, 310, 410a, 410b. Ces contrôleurs agissent sur instructions portées par des signaux en provenance du cockpit de l'aéronef 100 (activation moteur sans rotation de l'hélice ou avec rotation de l'hélice).

## Revendications

1. Ensemble moteur électrique de propulsion (101) pour aéronef (100), comportant une source d'énergie électrique (311, 411a) et un moteur électrique (306) muni d'un arbre d'entraînement (308) sur lequel est montée une hélice de propulsion (314), le moteur électrique (306) comportant un premier ensemble de bobinages (203a, 203b, 203c) relié à ladite source d'énergie électrique (311, 411a) et agencé pour réaliser une fonction d'entraînement en rotation de l'arbre d'entraînement (308),
**caractérisé en ce que** le moteur électrique comporte en outre un deuxième ensemble de bobinages (204a, 204b, 204c) qui, lorsque l'arbre d'entraînement (308) est entraîné en rotation par une alimentation électrique du premier ensemble de bobinages (203a, 203b, 203c), est agencé pour réaliser une fonction de génération électrique destinée à alimenter des charges non propulsives (301a, 301b, 301c) de l'aéronef (100).

2. Ensemble moteur électrique de propulsion (101) selon la revendication 1, dans lequel le premier ensemble de bobinages (203a, 203b, 203c) est inclus dans un premier stator installé de manière solidaire d'un carter du moteur électrique (306), le deuxième ensemble de bobinages (204a, 204b, 204c) est inclus dans un deuxième stator installé aussi de manière solidaire du carter, et les premier et deuxième stators sont couplés à un même rotor installé de manière solidaire de l'arbre d'entraînement (308).

3. Ensemble moteur électrique de propulsion (101) selon la revendication 2, dans lequel le deuxième stator est installé dans le carter entre le premier stator et un fond dudit carter côté non-entraîné.

4. Ensemble moteur électrique de propulsion (101) selon l'une quelconque des revendications 1 à 3, dans lequel la source d'énergie électrique (311, 411a) est un ensemble de piles à combustible.

5. Ensemble moteur électrique de propulsion (101) selon l'une quelconque des revendications 1 à 4, dans lequel l'hélice (314) est montée en roue libre sur l'arbre d'entraînement (308) de sorte que, lorsque l'arbre d'entraînement (308) tourne dans un sens, l'arbre d'entraînement (308) est en prise avec l'hélice (314) et entraîne l'hélice (314) en rotation, et lorsque l'arbre d'entraînement (308) tourne dans l'autre sens par déphasage de π de l'alimentation électrique du premier ensemble de bobinages (203a, 203b, 203c), l'arbre d'entraînement (308) tourne librement sans entraîner l'hélice (314).

6. Ensemble moteur électrique de propulsion (101) selon la revendication 5, comportant un convertisseur continu-alternatif (310) qui est agencé pour convertir un courant continu généré par la source d'énergie électrique (311) en courant alternatif alimentant le premier ensemble de bobinages (203a, 203b, 203c) et qui est contrôlé pour appliquer un déphasage de π de l'alimentation électrique du premier ensemble de bobinages (203a, 203b, 203c) pour changer le sens de rotation de l'arbre d'entraînement (308).

7. Ensemble moteur électrique de propulsion (101) selon la revendication 5, comportant :
- un convertisseur continu-alternatif (410a) agencé pour convertir un courant continu généré par la source d'énergie électrique (411a) en courant alternatif alimentant le premier ensemble de bobinages (203a, 203b, 203c) ;
- une autre source d'énergie électrique (411b) ;
- un autre convertisseur continu-alternatif (410b) agencé pour convertir un courant continu généré par l'autre source d'énergie électrique (411b) en courant alternatif alimentant le premier ensemble de bobinages (203a, 203b, 203c) et qui est agencé pour générer une alimentation électrique déphasée de π ;
et les convertisseurs continu-alternatif (410a, 410b) sont contrôlés pour être activés de manière exclusive l'un par rapport à l'autre.

8. Aéronef (100) comportant au moins un ensemble moteur électrique de propulsion (101) selon l'une quelconque des revendications 1 à 7 alimentant des charges non propulsives (301a, 301b, 301c) de l'aéronef (100).

9. Aéronef (100) selon la revendication 8, comportant au moins une source d'alimentation électrique supplémentaire agencée pour prendre momentanément le relais du deuxième ensemble de bobinages (204a, 204b, 204c) et alimenter électriquement les charges non-propulsives (301a, 301b, 301c) de l'aéronef (100) lorsque le moteur électrique (306) doit être arrêté.
